# EUROPEAN PATENT APPLICATION

(11) **EP 3 584 755 A1**
(43) Date of publication of application: **25.12.2019**
(21) Application number: 18753632.1
(22) Date of filing: 06.02.2018
(51) Int. Cl.: G06Q 20/40, G06F 21/44

(54) **SERVER AND AUTHENTICATION SYSTEM**

(30) Priority: 17.02.2017 JP 2017028300
(71) Applicant: Sony Corporation, Tokyo 108-0075 (JP)
(72) Inventor: HIURA, Yuji, Tokyo 108-0075 (JP); SUEYOSHI, Masahiro, Tokyo 108-0075 (JP)
(74) Representative: Witte, Weller & Partner Patentanwälte mbB
(86) International application number: PCT/JP2018/003879
(87) International publication number: WO 2018/150931

(57) **Abstract**

To provide a server with which, when an IC card assumed to be used offline is to be applied to a form in which a value is held in a server, authentication of the IC card can be performed safely.

A server is provided, the server including: a providing unit configured to provide, to a terminal that performs proximity non-contact communication with a wireless communication device including an IC chip, authentication data for authentication of the wireless communication device; an acquiring unit configured to acquire, from the terminal, reception data received by the proximity non-contact communication with the wireless communication device, the reception data including a usage count of the authentication data; and an authenticating unit configured to perform authentication of the wireless communication device by using the authentication data and the reception data.

## Description

### TECHNICAL FIELD

The present disclosure relates to a server and an authentication method.

### BACKGROUND ART

The provision of values to IC cards that perform communication by proximity non-contact communication is being widely carried out (for example, see Patent Document 1, etc.). In doing so, in order to provide service offline, IC cards that securely hold values and secure terminals that have tamper resistance and that are for operating the values have been utilized. Meanwhile, with the recent spread of networks and the recent increase in forms in which values are held in servers, a form of use of IC cards can be considered in which authentication of a value in a server is performed by confirming that a card is correct.

### CITATION LIST

### PATENT DOCUMENT

Patent Document 1: Japanese Patent Application Laid-Open No. 2009-110202

### SUMMARY OF THE INVENTION

### PROBLEMS TO BE SOLVED BY THE INVENTION

In a case where an IC card assumed to be used offline is to be applied to a form in which a value is held in a server, there are points that need to be considered in the authentication of the IC card.

Therefore, in the present disclosure, a server and an authentication method are proposed which are novel and improved and with which, when an IC card assumed to be used offline is to be applied to a form in which a value is held in a server, authentication of the IC card can be performed safely.

### SOLUTIONS TO PROBLEMS

According to the present disclosure, a server is provided, the server including: a providing unit configured to provide, to a terminal that performs proximity non-contact communication with an IC card, authentication data for authentication of the IC card; an acquiring unit configured to acquire, from the terminal, reception data received by the proximity non-contact communication with the IC card, the reception data including a usage count of the authentication data; and an authenticating unit configured to perform authentication of the IC card by using the authentication data and the reception data.

Furthermore, according to the present disclosure, an authentication method is provided, the authentication method including: providing, to a terminal that performs proximity non-contact communication with an IC card, authentication data for authentication of the IC card; acquiring, from the terminal, reception data received by the proximity non-contact communication with the IC card, the reception data including a usage count of the authentication data; and performing authentication of the IC card by using the authentication data and the reception data.

### EFFECTS OF THE INVENTION

As described above, according to the present disclosure, a server and an authentication method can be provided which are novel and improved and with which, when an IC card assumed to be used offline is to be applied to a form in which a value is held in a server, authentication of the IC card can be performed safely.

Note that the above-described effect is not necessarily a limiting effect, and any effect described in the present description or other effects that could be understood from the present description may be achieved together with or in place of the above-described effect.

### BRIEF DESCRIPTION OF DRAWINGS

Fig. 1 is an explanatory diagram showing an example of a configuration of an authentication system pertaining to an embodiment of the present disclosure.
Fig. 2 is an explanatory diagram showing an example of a functional configuration of an IDcd authentication server.
Fig. 3 is a flowchart showing an example of operations of the IDcd authentication server and an IC card.
Fig. 4 is a flowchart showing an example of operations of the IDcd authentication server and a terminal.
Fig. 5 is a flowchart showing an example of operations of the IDcd authentication server and a service provider.
Fig. 6 is a flowchart showing an example of operations of the IDcd authentication server, the terminal, and the service provider.
Fig. 7 is a flowchart showing an example of operations of the service provider, the terminal, and the IC card.
Fig. 8 is an explanatory diagram for describing processing in the IC card.
Fig. 9 is a flowchart showing an example of operations of the IDcd authentication server and the service provider.
Fig. 10 is an explanatory diagram for describing processing by an IC card authentication unit.
Fig. 11 is a flowchart showing an example of operations of the IDcd authentication server, the service provider, and the terminal.
Fig. 12 is a flowchart showing an example of operations of the terminal and the IC card.
Fig. 13 is a flowchart showing an example of operations of the service provider, the terminal, and the IC card.
Fig. 14 is an explanatory diagram showing a structure of a request sentence that the terminal generates.
Fig. 15 is a flowchart showing an example of operations of the IDcd authentication server and the service provider.
Fig. 16 is a flowchart showing an example of operations of the IDcd authentication server, the service provider, and another provider.
Fig. 17 is a flowchart showing an example of operations of the IDcd authentication server, the service provider, the terminal, and the IC card.
Fig. 18 is a flowchart showing an example of operations of the service provider, the terminal, and the IC card.
Fig. 19 is an explanatory diagram showing how a payment-accepting side changes a payment amount by performing a fraudulent act.
Fig. 20 is an explanatory diagram showing a mechanism with the aim of preventing a fraudulent act by the payment-accepting side.
Fig. 21 is an explanatory diagram describing money transfer processing between individuals, in which IC card authentication is used.

### MODE FOR CARRYING OUT THE INVENTION

In the following, a preferred embodiment of the present disclosure will be described in detail, with reference to the attached drawings. Note that, in the present description and drawings, redundant description will be omitted by providing constituent elements having substantially the same functional configuration with the same reference symbols.

Note that description will be provided in the following order.
1. Embodiment of Present Disclosure
1.1. Overview
1.2. Examples of Configurations
1.3. Examples of Operations
2. Summary

### <1. Embodiment of Present Disclosure>

### [1.1. Overview]

First, before describing the embodiment of the present disclosure, the process through which the embodiment of the present disclosure was arrived at will be described.

In order to provide service offline, IC cards that securely hold values and secure terminals that have tamper resistance and that are for operating the values have been utilized. Meanwhile, with the recent spread of networks and the recent increase in forms in which values are held in servers, a form of use of IC cards can be considered in which authentication of a value in a server is performed by confirming that a card is correct.

In a case where an IC card conventionally assumed to be used offline is to be applied to a form in which a value is held in a server, the following points need to be made clear.

A lot of communication took place for mutual authentication with IC cards, and the implementation of terminals has become complicated.

Even if a secret key was leaked, the leakage could not be detected and it could not be distinguished whether or not the leaked key was being used, and it could not be determined whether service continuation should be stopped.

Furthermore, in order to determine whether or not an IC card is correct, a secret key and a secure chip for storing the secret key were necessary at the terminal-side, and this led to increased cost and complexity of management at the terminal-side. Furthermore, even if a secret key and a secure chip are arranged at the server-side, a lot of communication becomes necessary and thus, the cost for developing terminals and servers on the communication path was high. Depending on the existing environment, it was necessary to separately provide a dedicated communication path.

Even if a secure chip is used to determine that an IC card and an IDcd of the IC card are correct, other people and systems receiving the transfer of the results of the determination could not determine whether or not the results were correct and had no other choice but to trust the source from which the results were transferred.

There was a need to provide high level protection to secret keys and secure chips, regardless of the convertibility and the security protection level of each service in which the determined IC card and the IDcd of the IC card were used.

In a case where a certification of an IC card and an IDcd became newly necessary, a dedicated IC card and IDcd for certification were issued. In addition, it was necessary to prepare, each time and for each terminal, a reader/writer and a security chip storing a secret key of an IC card.

Therefore, the discloser of the present application performed diligent investigation for a technology for making the above-described points clear. As a result, the discloser of the present application, as described in the following, has come to contrive a technology with which, when an IC card assumed to be used offline, in addition to being used offline, is to be applied to a form in which a value is held in a server, authentication of the IC card can be performed safely.

### [1.2. Examples of Configurations]

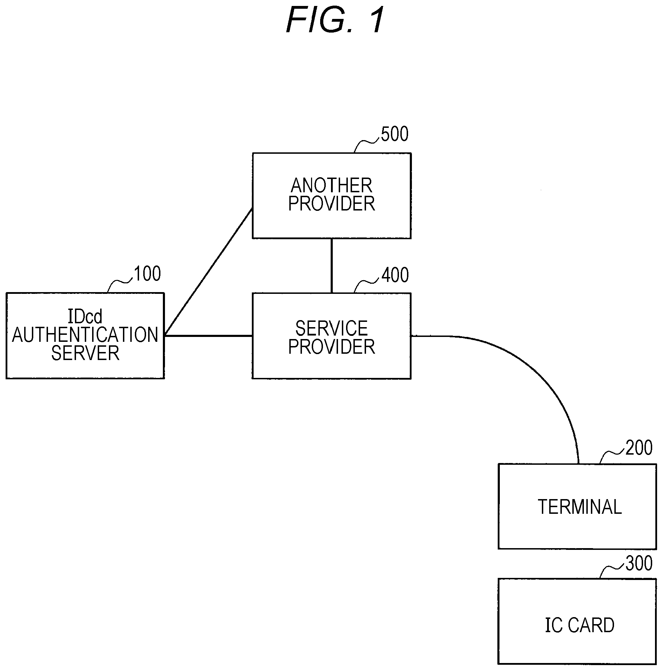

Fig. 1 is an explanatory diagram showing an example of a configuration of an authentication system pertaining to an embodiment of the present disclosure. In this system, a form of use of an IC card is assumed in which authentication that the IC card is the owner of a value in a server is performed by confirming that the IC card is correct, due to an increase in forms in which values are held in servers. Fig. 1 shows an IDcd authentication server 100, a terminal 200 having a reader/writer that communicates with an IC card 300 by proximity non-contact communication, and an IC card 300 with a built-in IC chip. Furthermore, Fig. 1 also shows a service provider 400 that provides the IC card 300 with a service, and another provider 500. The service provider 400 and the another provider 500 may, for example, take the form of servers.

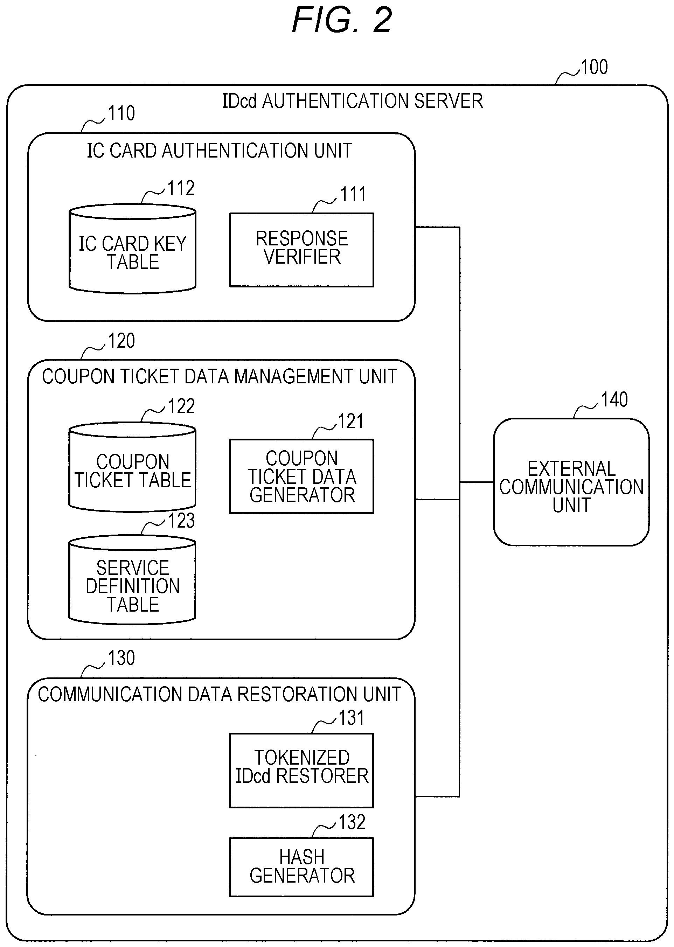

Fig. 2 is an explanatory diagram showing an example of a functional configuration of the IDcd authentication server 100. The IDcd authentication server 100 includes an IC card authentication unit 110, a coupon ticket data management unit 120, a communication data restoration unit 130, and an external communication unit 140.

The IC card authentication unit 110 authenticates the IC card 300. The IC card authentication unit 110 includes a response verifier 111 and an IC card key table 112. The response verifier 111 verifies whether a response generated by the IC card 300 in response to a challenge is correct. The response verifier 111 has the same mechanism as the mechanism in the IC card 300 for generating a response. The IC card key table 112 holds key information necessary for authenticating the IC card 300. Specifically, the IC card key table 112 holds, for each IC card key, an IC card key ID and IC card key information. An IC card key ID is an ID for identifying an IC card key. IC card key information is key information necessary for authenticating a secret key stored in an IC card.

The coupon ticket data management unit 120 manages coupon ticket data and service definitions. The coupon ticket data is unique data in which information necessary for authentication of the IC card 300 is defined for each terminal 200. The coupon ticket data is a data string including a challenge and an ID tokenization key, as described later. The IDcd authentication server 100 may collectively provide a plurality of pieces of coupon ticket data to the terminal 200, or may generate and provide coupon ticket data to the terminal 200 for each request transmitted in response to authentication at the terminal 200.

The coupon ticket data management unit 120 includes a coupon ticket data generator 121 and a coupon ticket table 122. The coupon ticket data generator 121 generates coupon ticket data on the basis of a predetermined rule. The coupon ticket table 122 manages terminals 200 accessing the IC card 300, and holds, for each terminal 200, data necessary for generating the coupon ticket data. Specifically, the coupon ticket table 122 holds a terminal ID, initial coupon ticket data, a coupon ticket data derivation key, a present usage count, a present dispensation count, and final coupon ticket data. The terminal ID is an ID for identifying the terminal 200. The initial coupon ticket data is the first key from which coupon ticket data is derived. The coupon ticket data derivation key is a key with which next coupon ticket data is derived and generated from coupon ticket data. The present usage count is a count indicating the number of pieces of coupon ticket data that have been used up to present. The present dispensation count is a count indicating the number of pieces of coupon ticket data that have been dispensed up to present. The final coupon ticket data is the coupon ticket data that has been authenticated last.

The communication data restoration unit 130 restores data encrypted according to a predetermined rule from the terminal 200. The communication data restoration unit 130 includes a tokenized IDcd restorer 131 and hash generation 132. The tokenized IDcd restorer 131 restores tokenized IDcds.

The IDcd authentication server 100 additionally holds a service definition table 123 that manages the service provider 400. The service definition table 123 manages service providers, and holds a list of terminals used by service providers and types of keys of IC cards accepted by the service providers. The service definition table 123 holds, for each service provider 400, a service ID, a terminal ID list, and a key ID list. The service ID is an ID for identifying a service provider. The terminal ID list is a terminal ID list of terminals used by a service provider. The key ID list is an IC card key ID list of IC card keys that each terminal can accept.

The external communication unit 140 executes communication processing with devices outside the IDcd authentication server 100 by using an arbitrary-defined communication protocol.

### [1.3. Examples of Operations]

Next, examples of operations of the authentication system will be described.

### (Example 1)

As a first example, an example will be shown in which a plurality of pieces of coupon ticket data is sent to each terminal in advance and authentication is performed by transmitting a response to the IDcd authentication server 100 each time the IC card 300 is held over a terminal. Also corresponding to this is a case where the terminal 200 acquires coupon ticket data from the IDcd authentication server 100 via the service provider 400 each time the IC card 300 is held over the terminal 200, assuming a case where the terminal 200 is not secure.

### (1-1) Registration of IC Card Key Information

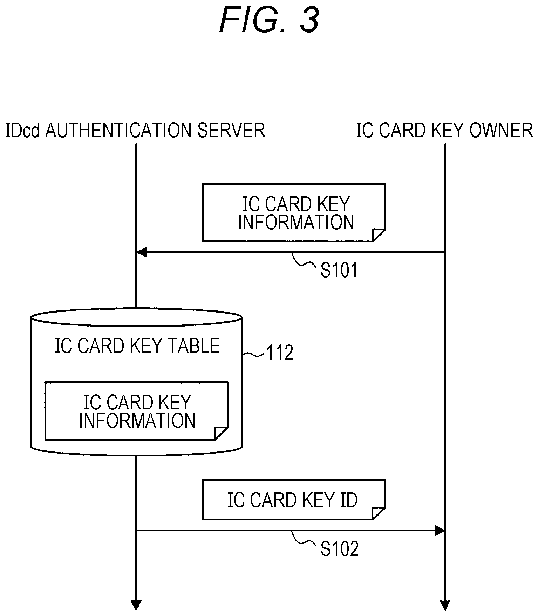

First, an example of operations when IC card key information held in the IC card 300 is registered to the IDcd authentication server 100 will be described. Fig. 3 is a flowchart showing an example of operations of the IDcd authentication server 100 and the IC card 300. In response to a predetermined method, e.g., in response to the IC card 300 having been held over the terminal 200 for registering the IC card key information to the IDcd authentication server 100, the IC card key information is transmitted from the IC card 300 to the IDcd authentication server 100 (step S101). Here, personal authentication of the registrant holding the IC card 300 and encryption of the communication path with the IDcd authentication server 100 are performed, as necessary. The IDcd authentication server 100 registers the IC card key information transmitted from the IC card 300 to the IC card key table 112, and returns an IC card key ID to the IC card 300 (step S102). This IC card key ID may be managed by the user of the IC card 300 in some way. For example, the IC card key ID may be stored inside an information communication device held by the user of the IC card 300.

### (1-2) Registration of Terminal

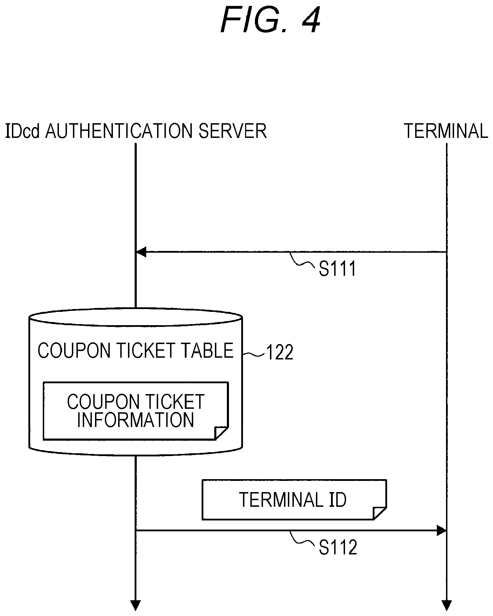

Next, an example of operations when information of the terminal 200 is registered to the IDcd authentication server 100 will be described. Fig. 4 is a flowchart showing an example of operations of the IDcd authentication server 100 and the terminal 200. The terminal 200 sends a request for registration to the IDcd authentication server 100 at a predetermined timing (step S111). Here, personal authentication of the registrant and encryption of the communication path with the IDcd authentication server 100 are performed, as necessary. In response to this request, the IDcd authentication server 100 assigns a unique terminal ID, and generates initial coupon ticket data and a coupon ticket data derivation key for the terminal ID. The IDcd authentication server 100 allocates the generated initial coupon ticket data to the initial coupon ticket data and the final coupon ticket data in the coupon ticket table 122. Furthermore, the IDcd authentication server 100 allocates the generated coupon ticket data derivation key to the coupon ticket data derivation key in the coupon ticket table 122. Furthermore, the IDcd authentication server 100 sets both the present usage count and the present dispensation count in the coupon ticket table 122 to zero. The IDcd authentication server 100 provides the terminal ID to the terminal 200 (step S112). The terminal 200 holds a present usage count in addition to the terminal ID and a later-described coupon ticket data list. The initial value of the present usage count is set to zero.

### (1-3) Registration of Service Provider

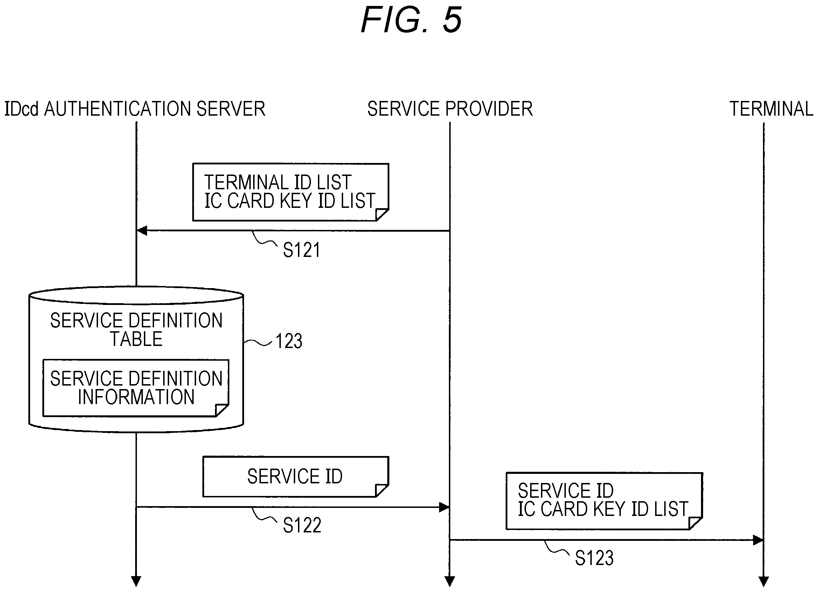

Next, an example of operations when information of the service provider 400 is registered to the IDcd authentication server 100 will be described. Fig. 5 is a flowchart showing an example of operations of the IDcd authentication server 100 and the service provider 400. The service provider 400 sends a request for registering a service definition to the IDcd authentication server 100 (step S121). Here, personal authentication of the registrant and encryption of the communication path with the IDcd authentication server 100 are performed, as necessary. The service provider 400 transmits a terminal ID list and an IC card key ID list to the IDcd authentication server 100. In response to this request, the IDcd authentication server 100 assigns a unique service ID and registers the information to the service definition table 123. The IDcd authentication server 100 provides the assigned service ID to the service provider 400 (step S122). The service provider 400 notifies a terminal 200 using the service (a terminal 200 corresponding to a terminal ID included in the terminal ID list) of the service ID and the IC card key ID list (step S123).

### (1-4) Output (Dispensation) of Coupon Ticket Data List

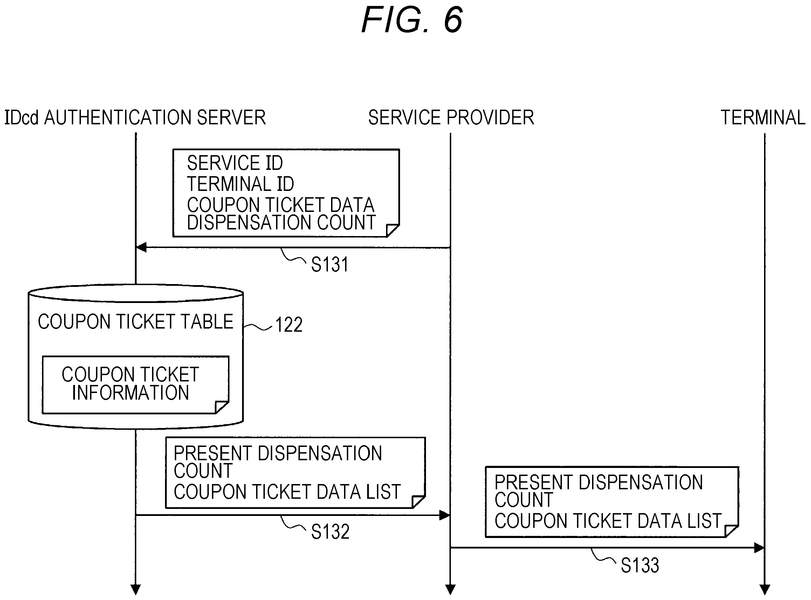

Next, an example of operations when the IDcd authentication server 100 outputs (dispenses) a coupon ticket data list will be described. Fig. 6 is a flowchart showing an example of operations of the IDcd authentication server 100, the terminal 200, and the service provider 400.

The service provider 400, for each terminal 200 for which the service provider 400 would like to dispense a coupon ticket data list, requests the IDcd authentication server 100 to dispense a coupon ticket data list (step S131). The service provider 400 transmits, to the IDcd authentication server 100, the service ID of the service provider 400, the terminal ID of the terminal for which a coupon ticket data list is to be dispensed, and information of a coupon ticket data dispensation count.

In response to this dispensation request, the IDcd authentication server 100 generates pieces of coupon ticket data corresponding to the input coupon ticket data dispensation count by using the coupon ticket data generator 121 and through the following procedure. First, the IDcd authentication server 100 specifies a terminal ID in the coupon ticket table from the terminal ID input from the service provider 400. Next, the IDcd authentication server 100 inputs the final coupon ticket data and the coupon ticket data derivation key to the coupon ticket data generator 121 to generate a new piece of coupon ticket data. Furthermore, the IDcd authentication server 100 outputs the present dispensation count and the generated coupon ticket data list to the service provider 400, and increments the present dispensation count in the coupon ticket table 122 by the number dispensed (step S132).

The service provider 400 transfers the present dispensation count and the coupon ticket data list acquired from the IDcd authentication server 100 to the terminal 200 corresponding to the terminal ID (step S133). The terminal 200 corresponding to the terminal ID adds the acquired coupon ticket data list to the coupon ticket data list held by the terminal 200.

### (1-5) Acquisition of Card Response

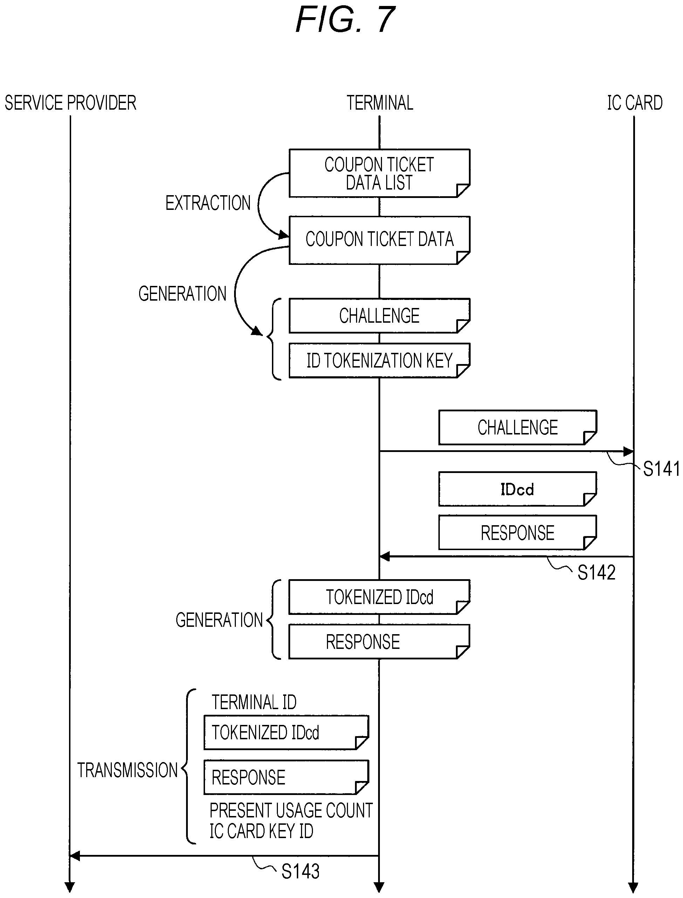

The terminal 200 performs card response acquisition described in the following each time the IC card 300 is held over the terminal 200 and authentication becomes necessary. Fig. 7 is a flowchart showing an example of operations of the service provider 400, the terminal 200, and the IC card 300. The terminal 200 performs the following card response acquisition each time the IC card 300 is held over the terminal 200 and authentication of the IC card 300 becomes necessary. First, the terminal 200 extracts the youngest piece of data from the coupon ticket data list that the terminal 200 holds, and deletes this coupon ticket data from the coupon ticket data list and also increments the present usage count by one. Next, the terminal 200 extracts the challenge and the ID tokenization key from the extracted coupon ticket data. For example, the first 8 bytes or 16 bytes at the head of the coupon ticket data are used as the challenge, and the next 8 bytes are used as the ID tokenization key. Needless to say, the definitions of the challenge and the ID tokenization key are not limited to this example.

When the IC card 300 is held over the terminal 200, the terminal 200 uses information determined for each IC card key ID to specify the IC card key ID that is used. Here, the terminal 200 issues a one-sided authentication command of the IC card 300. In doing so, the terminal 200 inputs the challenge to the IC card 300 by proximity non-contact communication (step S141), and acquires, from the IC card 300, the IDcd and a response that the IC card 300 has generated in response to the challenge (step S142) .

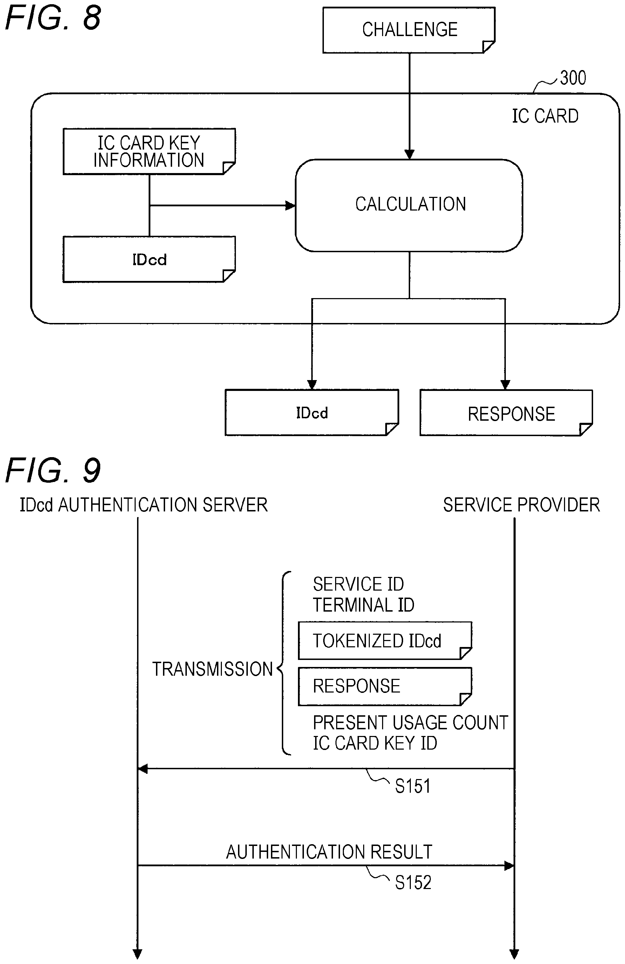

Fig. 8 is an explanatory diagram for describing processing in the IC card 300. When acquiring the challenge from the terminal 200, the IC card 300 generates a response to the challenge by performing a predetermined calculation using the IDcd and the IC card key information that the IC card 300 holds inside. Furthermore, the IC card 300 outputs the IDcd and the response that the IC card 300 has generated in response to the challenge.

Subsequently, with respect to the IDcd authentication server 100, the terminal 200 generates a tokenized IDcd by using the ID tokenization key. For example, the terminal 200 generates the tokenized IDcd by taking the exclusive OR with the IDcd and the ID tokenization key. Needless to say, the method for generating the tokenized IDcd is not limited to such an example. Furthermore, with respect to the response, etc., the terminal 200 generates an encrypted response by using a predetermined encryption method such as Secure Sockets Layer (SSL). Furthermore, the terminal 200 transmits the generated information to the service provider 400 (step S143). Here, the terminal 200 transmits the terminal ID, the tokenized IDcd, the response, the present usage count, and the IC card key ID to the service provider 400.

### (1-6) IC Card Authentication

Fig. 9 is a flowchart showing an example of operations of the IDcd authentication server 100 and the service provider 400. The service provider 400 transmits the response information acquired from the terminal 200 to the IDcd authentication server 100, and requests the IDcd authentication server 100 to authenticate the correctness of the response (step S151). Here, the service provider 400 transmits, to the IDcd authentication server 100, the service ID, the terminal ID, the tokenized IDcd, the response, the present usage count, and the IC card key ID.

The IDcd authentication server 100, by using the coupon ticket data management unit 120, generates coupon ticket data through the following procedure. First, the IDcd authentication server 100 specifies data in the coupon ticket table 122 from the terminal ID input from the service provider 400, and acquires the final coupon ticket data. Next, the IDcd authentication server 100 generates coupon ticket data from the present usage count input from the service provider 400. Rather than repeating generation a number of times corresponding to the present usage count input from the service provider 400 from the initial coupon ticket data in the coupon ticket table 122, the generation of coupon ticket data is repeated the number of times corresponding to the difference from the present usage count in the coupon ticket table 122 from the final coupon ticket data by using the coupon ticket data generator 121.

The IDcd authentication server 100, by using the communication data restoration unit 130, decrypts received data by using the input response information and the coupon ticket data generated by the coupon ticket data generator 121. First, the IDcd authentication server 100 acquires the challenge and the tokenization key from the coupon ticket data generated by the coupon ticket data generator 121. Next, the IDcd authentication server 100 inputs the IDcd and the tokenization key to the tokenized IDcd restorer 131 to acquire the IDcd.

Subsequently, the IDcd authentication server 100, by using the IC card authentication unit 110, authenticates the correctness of the response input from the service provider 400 by using the response information input from the service provider 400, the coupon ticket data that the IDcd authentication server 100 has generated, and the information that the IDcd authentication server 100 has decrypted. Specifically, the IDcd authentication server 100 performs the authentication through the following procedure. First, the IDcd authentication server 100 acquires IC card key information from the input IC card key ID. Next, the IDcd authentication server 100 inputs the restored IDcd, the challenge generated by the IDcd authentication server 100, and the IC card key information to the response verifier 111 to generate a response, and compares the response with the response input from the service provider 400 to determine whether the two are the same. In a case where the two are the same, the IDcd authentication server 100 regards that the IC card and the IDcd held over the terminal 200 are correct. Furthermore, the IDcd authentication server 100 sets the coupon ticket data that the IDcd authentication server 100 has generated as the final coupon ticket data, and sets the input present usage count as the present usage count. On the other hand, in a case where the two do not match, the IDcd authentication server 100 does not perform any subsequent processing and returns a predetermined error message indicating a mismatch to the service provider 400.

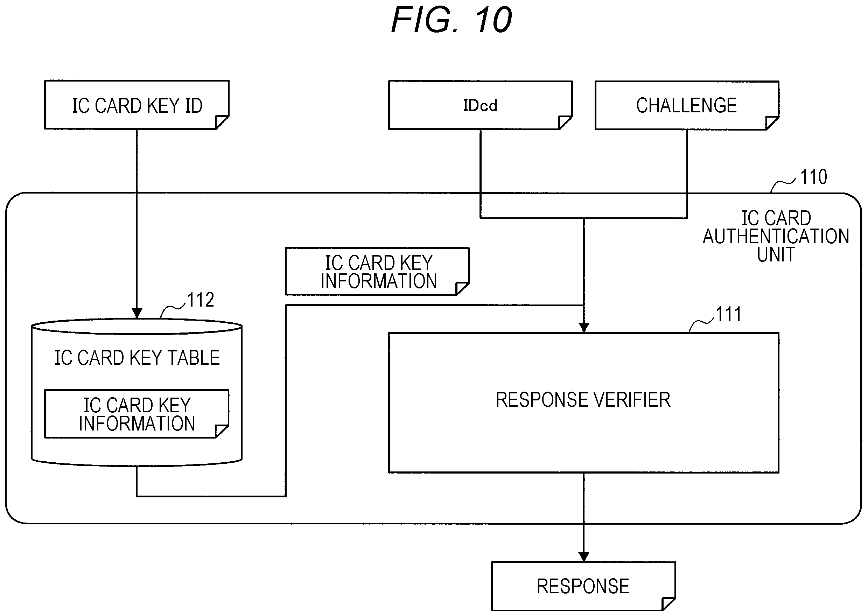

Fig. 10 is an explanatory diagram for describing processing by the IC card authentication unit 110. The IC card authentication unit 110 extracts the target IC card key information from the IC card key ID by referring to the IC card key table 112. Furthermore, the IC card authentication unit 110 inputs the restored IDcd, the challenge that the IC card authentication unit 110 has generated, and the IC card key information to the response verifier 111 to generate a response.

The terminal 200 consumes coupon ticket data each time authentication is performed. Thus, the terminal 200 additionally acquires coupon ticket data from the IDcd authentication server 100 when the terminal 200 runs short of coupon ticket data. The terminal 200 requests the service provider 400 for additional coupon ticket data. The service provider 400 inputs the service ID, the terminal ID, and a coupon ticket data dispensation count to the IDcd authentication server 100, and requests the IDcd authentication server 100 to additionally generate coupon ticket data. The IDcd authentication server 100 performs the same processing as the coupon ticket data list dispensation processing described above, and provides the generated coupon ticket data to the service provider 400. The service provider 400 transfers the coupon ticket data acquired from the IDcd authentication server 100 to the terminal 200 that has requested additional coupon ticket data.

### (Example 2)

As the next example, an example is shown in which a challenge and responses corresponding to IDcds are dispensed beforehand, in a case where a list of IDcds of IC cards to be held over the terminal 200 is known in advance.

### (2-1) Acquisition of Challenge Response List

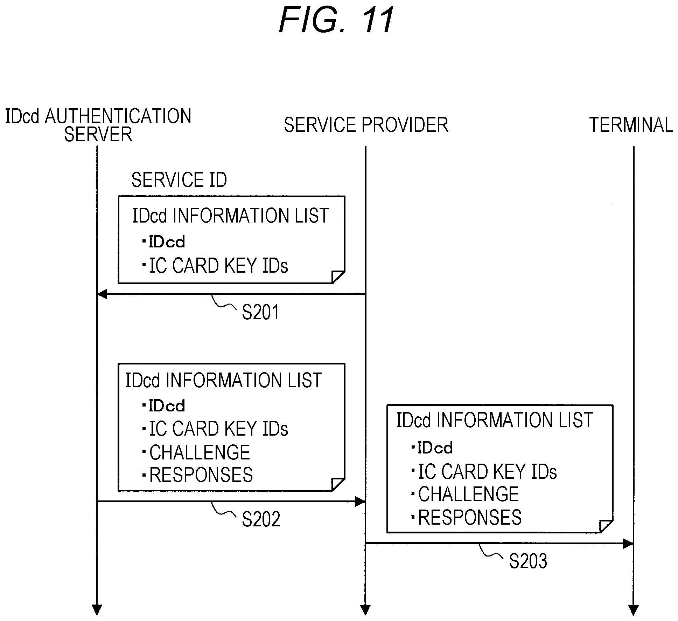

First, acquisition processing of a challenge response list will be described. Fig. 11 is a flowchart showing an example of operations of the IDcd authentication server 100, the service provider 400, and the terminal 200. The service provider 400 transmits an IDcd list of IC cards 300 scheduled to be held over the terminal 200 to the IDcd authentication server 100 (step S201). The service provider 400 transmits the service ID and a list of IDcd information (including IDcds and IC card key IDs) to the IDcd authentication server 100.

The IC card authentication unit 110 of the IDcd authentication server 100 acquires IC card key information from the IC card key IDs. The IC card authentication unit 110 also generates a challenge. The generation of the challenge is performed by random number generation or the like. Subsequently, the response verifier 111 of the IDcd authentication server 100 inputs an IDcd, IC card key information, and the challenge to acquire a response. This is repeated a number of times corresponding to the number of pieces of IDcd information in the list.

Furthermore, the IDcd authentication server 100 returns, to the service provider 400, a list that the IDcd authentication server 100 has generated (step S202). Specifically, the IDcd authentication server 100 transmits the service ID and a list of IDcd information (including the IDcds, the IC card key IDs, the challenge, and the responses).

The service provider 400 transmits the list received from the IDcd authentication server 100 to the terminal 200 (step S203). The terminal 200 holds the list transmitted from the service provider 400.

### (2-2) Confirmation of Card Response

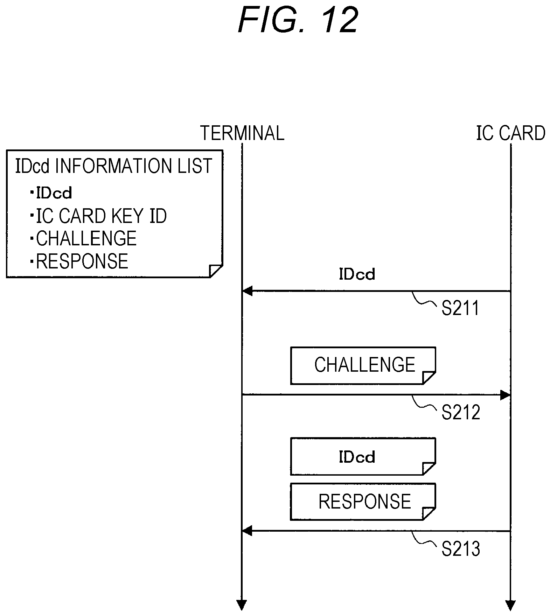

Fig. 12 is a flowchart showing an example of operations of the terminal 200 and the IC card 300. When an IC card 300 is held over the terminal 200, the terminal 200 acquires the IDcd of the IC card 300 by proximity non-contact communication (step S211). Next, after confirming the IDcd of the IC card 300, the terminal 200 issues a one-sided authentication command of the IC card 300 by using information specified by the IC card key ID to issue a challenge corresponding to the IDcd (step S212), and acquires a response from the IC card 300 (step S213).

The terminal 200 checks whether the response corresponding to the IDcd and the response received from the IC card 300 are the same. In a case where the two are the same, the terminal 200 regards that the IC card 300 and the IDcd held over the terminal 200 are correct, and executes subsequent processing. In a case where the two differ, the terminal 200 executes predetermined error processing.

### (Example 3)

As a third example, an example is described in which the terminal 200 generates a challenge to be input to the IC card 300, and the IDcd authentication server 100 certifies that a response to the challenge is the result of the challenge being input to the IC card.

### (3-1) Card Response Acquisition

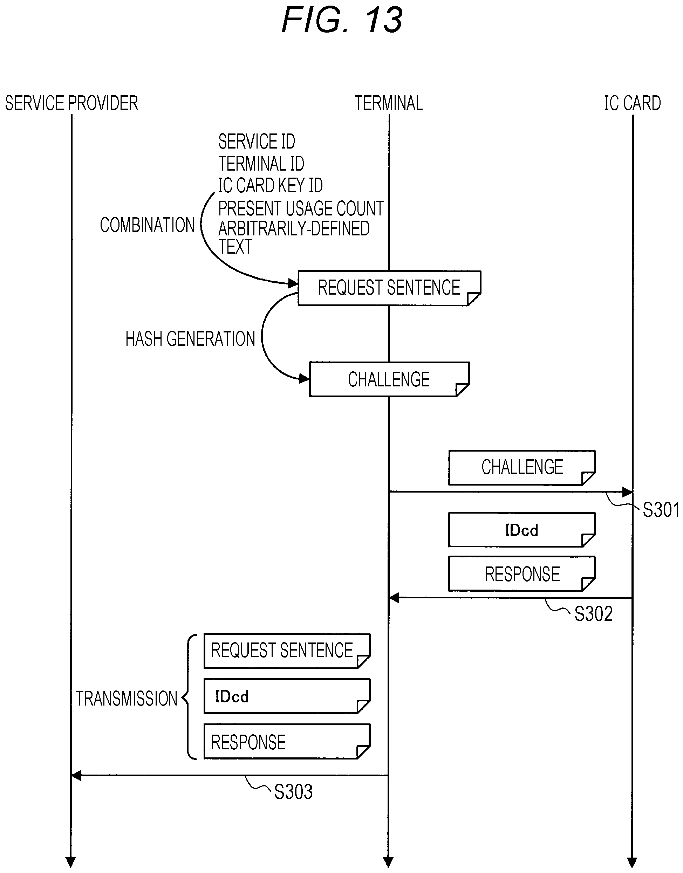

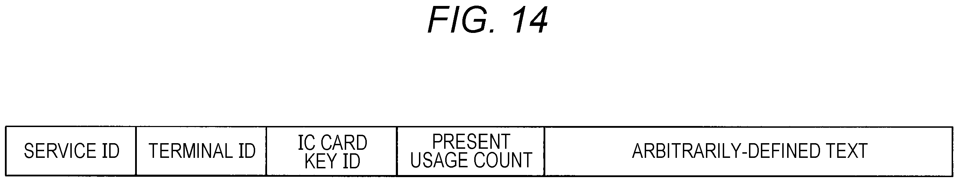

Fig. 13 is a flowchart showing an example of operations of the service provider 400, the terminal 200, and the IC card 300. The terminal 200 first generates a challenge to be input to the IC card 300. The terminal 200 generates a request sentence yielded by combining the service ID, the terminal ID, the IC card key ID, the present usage count, and arbitrary-defined text. Fig. 14 is an explanatory diagram showing a structure of a request sentence that the terminal 200 generates.

Subsequently, the terminal 200 generates a hash for the generated request sentence. Furthermore, the terminal 200 increments the present usage count by one.

When the IC card 300 is held over the terminal 200, the terminal 200 issues a one-sided authentication command of the IC card 300 by using information specified by the IC card key ID. In doing so, the terminal 200 inputs the generated hash to the IC card 300 as a challenge by proximity non-contact communication (step S301), and acquires an IDcd and a response from the IC card 300 by proximity non-contact communication (step S302).

Subsequently, the terminal 200 transmits, to the service provider 400, the generated request sentence and the IDcd and the response that are acquired from the IC card 300 (step S303).

### (3-2) Card Response Authentication

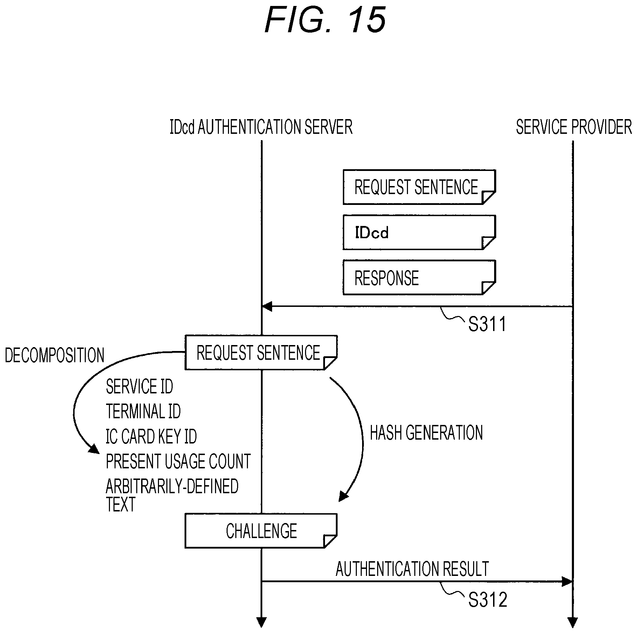

Fig. 15 is a flowchart showing an example of operations of the IDcd authentication server 100 and the service provider 400. The service provider 400 requests the IDcd authentication server 100 to authenticate whether the response is correct (step S311). Here, the service provider 400 transmits the request sentence, the IDcd, and the response to the IDcd authentication server 100.

The IDcd authentication server 100, by using the hash generator 132, generates a hash from the received request sentence and sets the hash as a challenge. Moreover, the IDcd authentication server 100 extracts the service ID, the terminal ID, the IC card key ID, and the present usage count from the received request sentence. Subsequently, the coupon ticket data management unit 120 of the IDcd authentication server 100 refers to the service definition table 123 to confirm whether the extracted IC card key ID is present in the IC card key ID list corresponding to the service ID. Subsequently, IC card key information corresponding to the IC card key ID is specified from the IC card key table 112, by the IC card authentication unit 110. The IDcd authentication server 100 uses the response verifier 111 and inputs the IDcd, the challenge, and the IC card key information to generate a response. Furthermore, the IDcd authentication server 100 transmits an authentication result using the generated response to the service provider 400 (step S312). In a case where the response that was received beforehand and the generated response are equal, the IDcd authentication server 100 regards that the received response was generated by inputting the request sentence to the IC card 300 specified by the IDcd.

### (3-3) Transfer of Authentication Result

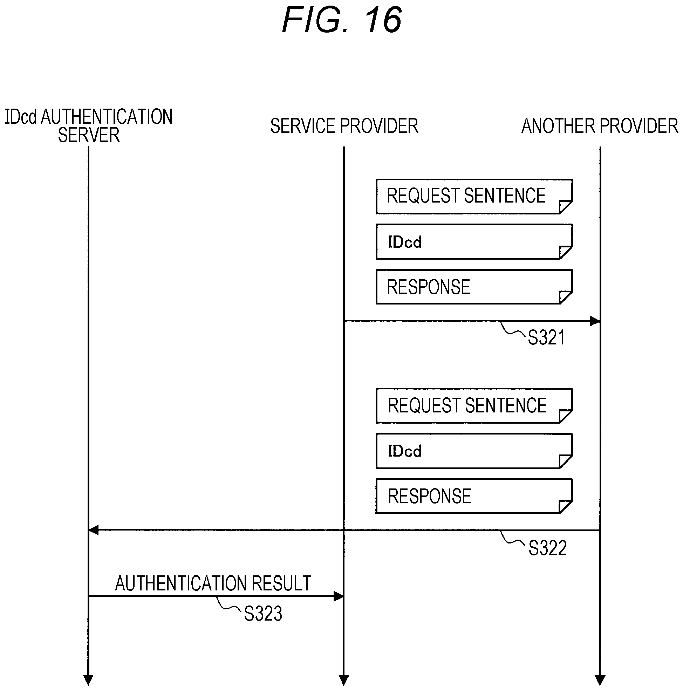

The service provider 400 may hold the authentication result or transfer the authentication result to the another provider 500. Fig. 16 is a flowchart showing an example of operations of the IDcd authentication server 100, the service provider 400, and the another provider 500.

The another provider 500 receives the request sentence, the IDcd, and the response from the service provider 400 (step S321). The another provider 500 transmits the request sentence, the IDcd, and the response to the IDcd authentication server 100 (step S322). The IDcd authentication server authenticates the response received from the another provider 500 and returns a result to the another provider 500, in a similar manner as in the card response authentication described above.

### (Example 4)

As a fourth example, an example is described which has the aim of strengthening tolerance during network disconnection and of improving response performance in network communication.

In a case where a server of the service provider is inside a closed network, the server becomes more vulnerable to the influences of network disconnection, congestion, and the like, due to the influence of the Internet communication between the server of the service provider and the IDcd authentication server 100.

Therefore, in the fourth example, pairs of a challenge and a response are held in advance in the server of the service provider 400 as cache. With this configuration, authentication to be performed next can be completed between the service provider 400 and a terminal 200, and even if the network between the server of the service provider and the IDcd authentication server 100 is disconnected, the next authentication can be performed between the service provider 400 and the terminal 200.

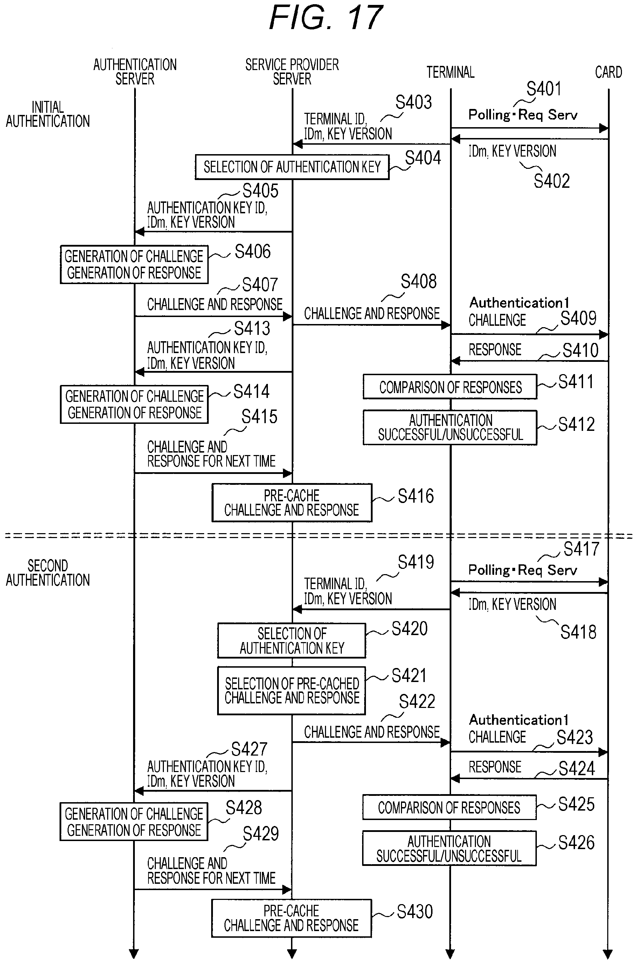

Fig. 17 is a flowchart showing an example of operations of the IDcd authentication server 100, the service provider 400, a terminal 200, and an IC card 300.

The terminal 200 periodically transmits polling (step S401). This polling includes a Request Service command for acquiring, from an IC card 300, an IDm (information unique to the IC card 300) and a key version. When an IC card 300 receives the polling transmitted from the terminal 200, the IC card 300 returns the IDm and the key version to the terminal 200 in response to the Request Service command (step S402).

The terminal 200 transmits, to the server of the service provider 400, the terminal ID of the terminal 200 and the IDm and key version that have been acquired from the IC card 300 in step S402 (step S403). The server of the service provider 400 selects an authentication key on the basis of the terminal ID of the terminal 200 and the IDm and key version of the IC card 300, which have been received from the terminal 200 (step S404), and transfers the information received from the terminal 200 to the IDcd authentication server 100 (step S405).

The IDcd authentication server 100 generates a challenge and a response on the basis of the information received from the server of the service provider 400 (step S406). Furthermore, the IDcd authentication server 100 dispenses the challenge and response that have been generated to the server of the service provider 400 (step S407). The server of the service provider 400 provides the terminal 200 with the challenge and response that have been dispensed from the IDcd authentication server 100 (step S408). The terminal 200 transmits the challenge to the IC card 300 to authenticate the IC card 300 having been held over the terminal 200 (step S409), and the IC card 300 generates a response to the challenge and returns the response to the terminal 200 (step S410). The terminal 200 compares the response acquired from the server of the service provider 400 and the response generated by the IC card 300 (step S411), and performs authentication of the IC card 300 (step S412).

Furthermore, the server of the service provider 400 transfers information received from the terminal 200 to the IDcd authentication server 100 in order to acquire in advance a challenge and response for the next authentication of the IC card 300 (step S413). The IDcd authentication server 100 generates a challenge and response on the basis of the information received from the server of the service provider 400 (step S414). Furthermore, the IDcd authentication server 100 dispensed the challenge and response that have been generated to the server of the service provider 400 (step S415). The server of the service provider 400 pre-caches the challenge and response that have been dispensed from the IDcd authentication server 100 (step S416). With such a configuration, the next authentication of the IC card 300 can be completed between the service provider 400 and the terminal 200. The situation will be described below.

The terminal 200 periodically transmits polling (step S417). This polling includes a Request Service command for acquiring, from an IC card 300, an IDm and a key version. When an IC card 300 receives the polling transmitted from the terminal 200, the IC card 300 returns the IDm and the key version to the terminal 200 in response to the Request Service command (step S418).

The terminal 200 transmits, to the server of the service provider 400, the terminal ID of the terminal 200 and the IDm and key version that have been acquired from the IC card 300 in step S402 (step S419). The server of the service provider 400 selects an authentication key on the basis of the terminal ID of the terminal 200 and the IDm and key version of the IC card 300, which have been received from the terminal 200 (step S420). Furthermore, upon the initial authentication, the server of the service provider 400 transferred the information received from the terminal 200 to the IDcd authentication server 100. However, here, because the server of the service provider 400 has pre-cached challenges and responses dispensed from the IDcd authentication server 100 in above-described step S416 in advance, the server of the service provider 400 selects a challenge and response from the pre-cached challenges and responses (step S421).

The server of the service provider 400 provides the terminal 200 with the challenge and response selected from the pre-cached challenges and responses (step S422). The terminal 200 transmits the challenge to the IC card 300 to authenticate the IC card 300 having been held over the terminal 200 (step S423), and the IC card 300 generates a response to the challenge and returns the response to the terminal 200 (step S424). The terminal 200 compares the response acquired from the server of the service provider 400 and the response generated by the IC card 300 (step S425), and performs authentication of the IC card 300 (step S426).

Furthermore, the server of the service provider 400 transfers information received from the terminal 200 to the IDcd authentication server 100 in order to acquire in advance a challenge and response for the next authentication of the IC card 300 (step S427). The IDcd authentication server 100 generates a challenge and response on the basis of the information received from the server of the service provider 400 (step S428). Furthermore, the IDcd authentication server 100 dispenses the challenge and response that have been generated to the server of the service provider 400 (step S429). The server of the service provider 400 pre-caches the challenge and response that have been dispensed from the IDcd authentication server 100 (step S430).

With such a configuration, a challenge and response pre-cached in advance in the server of the service provider 400 are used upon authentication of an IC card 300. Hence, exchange regarding authentication of the IC card 300 can be completed between the service provider 400 and the terminal 200.

Furthermore, due to a challenge and response pre-cached in advance in the server of the service provider 400 being used upon authentication of an IC card 300, the authentication of the IC card 300 becomes possible even in a case where there is a problem in the communication between the server of the service provider 400 and the IDcd authentication server 100 and data cannot be properly exchanged.

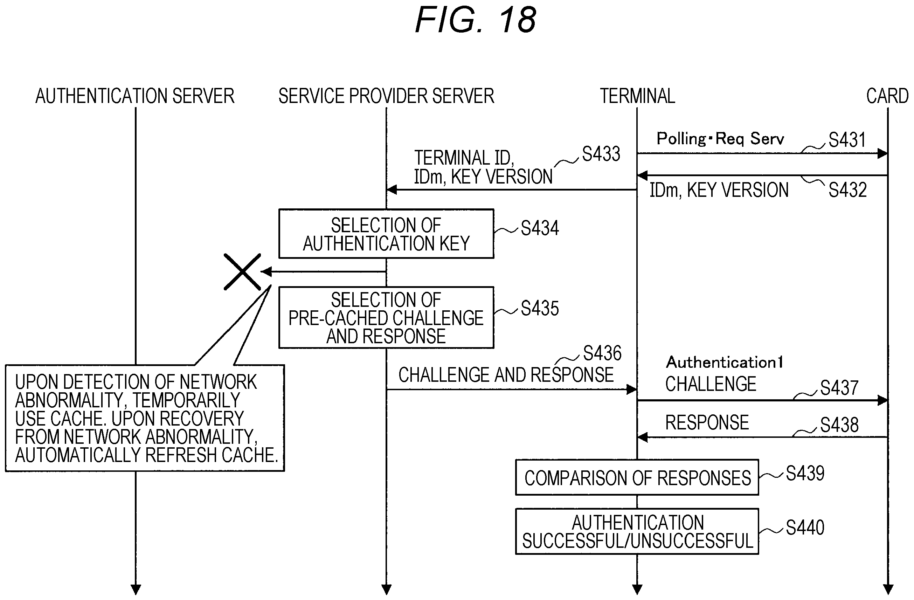

Fig. 18 is a flowchart showing an example of operations of the IDcd authentication server 100, the service provider 400, a terminal 200, and an IC card 300.

The terminal 200 periodically transmits polling (step S431). This polling includes a Request Service command for acquiring, from an IC card 300, an IDm and a key version. When an IC card 300 receives the polling transmitted from the terminal 200, the IC card 300 returns the IDm and the key version to the terminal 200 in response to the Request Service command (step S432).

The terminal 200 transmits, to the server of the service provider 400, the terminal ID of the terminal 200 and the IDm and key version that have been acquired from the IC card 300 in step S402 (step S433). The server of the service provider 400 selects an authentication key on the basis of the terminal ID of the terminal 200 and the IDm and key version of the IC card 300, which have been received from the terminal 200 (step S434). Subsequently, the server of the service provider 400 transfers the information received from the terminal 200 to the IDcd authentication server 100. However, here, suppose that a state is occurring in which there is a problem in the communication between the server of the service provider 400 and the IDcd authentication server 100 and data cannot be properly exchanged. Then, the server of the service provider 400 selects a challenge and response from the challenges and responses pre-cached in advance (step S435).

The server of the service provider 400 provides the terminal 200 with the challenge and response selected from the pre-cached challenges and responses (step S436). The terminal 200 transmits the challenge to the IC card 300 to authenticate the IC card 300 having been held over the terminal 200 (step S437), and the IC card 300 generates a response to the challenge and returns the response to the terminal 200 (step S438). The terminal 200 compares the response acquired from the server of the service provider 400 and the response generated by the IC card 300 (step S439), and performs authentication of the IC card 300 (step S440).

With such a configuration, due to a challenge and response pre-cached in advance in the server of the service provider 400 being used upon authentication of an IC card 300, the authentication of the IC card 300 becomes possible even in a case where there is a problem in the communication between the server of the service provider 400 and the IDcd authentication server 100 and data cannot be properly exchanged.

Thereafter, when the communication between the server of the service provider 400 and the IDcd authentication server 100 recovers, the server of the service provider 400 may delete pre-cached challenges and responses and furthermore, may newly acquire challenges and responses from the IDcd authentication server 100.

Note that the server of the service provider 400 may delete pre-cached challenges and responses at a time point when a predetermined time has elapsed. With such a configuration, it becomes possible not to use, for authentication, challenges and responses that are too old. For example, the server of the service provider 400 may periodically delete pre-cached challenges and responses. Furthermore, the server of the service provider 400 may delete pre-cached challenges and responses when a predetermined timing is reached.

For example, in a case where authentication with an IC card 300 is used when boarding transportation means such as a train, bus, or an airplane, the server of the service provider 400 may pre-cache in advance challenges and responses corresponding to the number of people with reservations. Furthermore, the server of the service provider 400 may delete the pre-cached challenges and responses once the departure time has passed. Accordingly, the IDcd authentication server 100 may add information regarding the term of validity when generating challenges and responses. Furthermore, the server of the service provider 400 may add information regarding the term of validity when pre-caching challenges and responses.

With such a configuration, the server of the service provider 400 can perform authentication with an IC card 300 without performing communication with the IDcd authentication server 100. Furthermore, the server of the service provider 400 can prevent the leak of challenges and responses and can improve security by deleting pre-cached challenges and responses that are unnecessary.

### (Example 5)

As a fifth example, an example will be described which has the aim of providing a countermeasure against illegal money transfer, such as Man In The Browser (MITB), by using IC card authentication.

With the explosive spread of Internet-connectable communication devices, e-commerce payment via the Internet and mPOS payment, which allows payment to be made on portable terminals, have become popular. Card authentication and personal authentication are strictly defined by the EMV specification, but the authentication of transactions is still in the process of being organized, and the dependency on the reliability of the Internet browsers used for payment and terminals that execute mPOS payment is high.

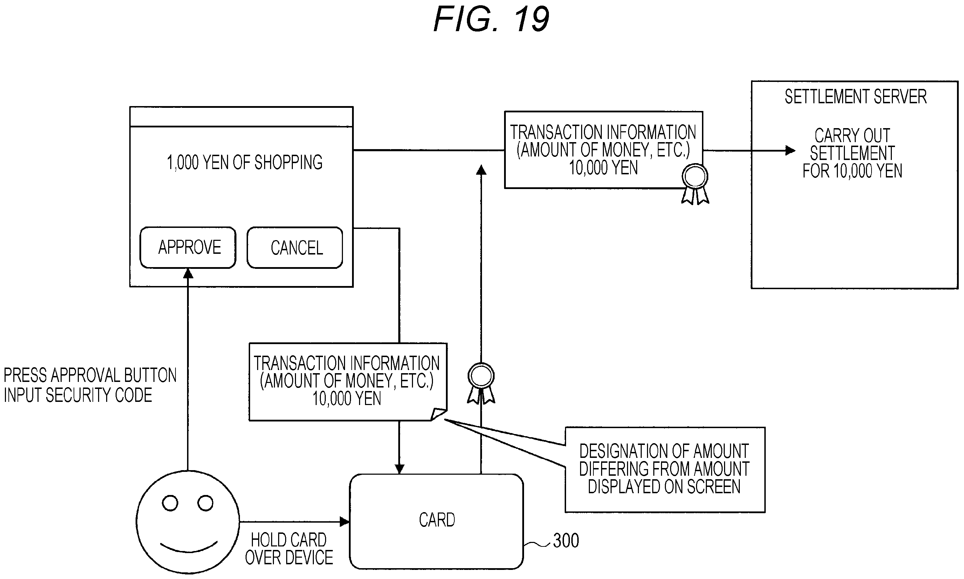

Therefore, if a payment-accepting side unfortunately performs a fraudulent act such as maliciously changing the payment amount, there is a risk of the side making the payment suffering from damage. For example, a case can be considered in which, while one thought he/she had paid 1,000 yen for shopping by using an mPOS terminal, the actual payment amount is 10,000 yen. Fig. 19 is an explanatory diagram showing how a payment-accepting side changes a payment amount by performing a fraudulent act. If a user has actually done 1,000 yen of shopping, payment of 1,000 yen is performed when the user holds his/her card over a reader/writer after confirming the payment amount and pressing the approval button, and entering a predetermined security code. However, if the payment-accepting side has actually set the payment amount to 10,000 yen, the transaction information transmitted from the store to a settlement server would indicate a transaction of 10,000 yen, and the settlement server (server of the service provider 400) would accept a payment of 10,000 yen.

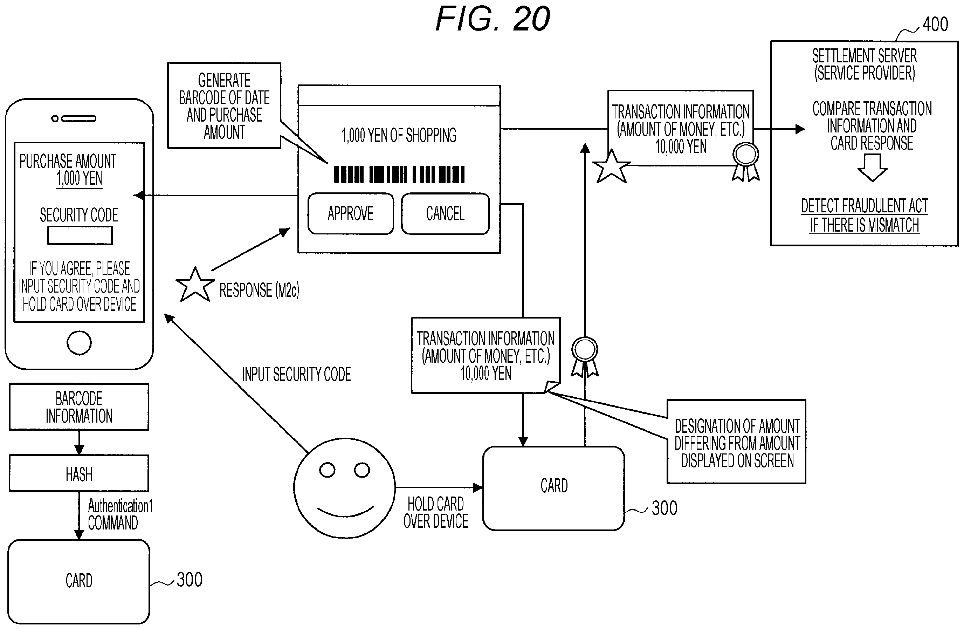

Therefore, in the following description, a mechanism capable of preventing such a fraudulent act will be described. Fig. 20 is an explanatory diagram showing a mechanism with the aim of preventing a fraudulent act by the payment-accepting side.

For example, in a case where 1,000 yen of shopping is done, an mPOS terminal generates a barcode of the date and purchase amount, and transmits an Authentication1 command from a reader/writer (terminal 200) to an IC card 300 after hashing the barcode information. The purchaser of merchandise inputs a predetermined security code into the mPOS terminal and then holds the IC card 300 over the reader/writer (terminal 200). As a result of this, the IC card 300 generates a response that is a response to the Authentication1 command.

Thereafter, in order to actually pay for the merchandise, the purchaser of the merchandise holds an EMV card, such as a credit card having a non-contact communication function, for example, over the reader/writer to perform the payment. Here, if the payment-accepting side performs a fraudulent act such as maliciously changing the payment amount to 10,000 yen, transaction information will be transmitted to the settlement server with the transaction information indicating a payment amount of 10,000 yen. However, because a response has been generated in advance for 1,000 yen of shopping during the authentication using the IC card 300, the settlement server is capable of comparing the response and the transaction information with one another to detect a mismatch in the payment amounts. Note that it may be the IDcd authentication server 100, and not the settlement server, that executes the comparison between the response and the transaction information. In a case where the IDcd authentication server 100 compares the response and the transaction information, the settlement server receives the result of the comparison by the IDcd authentication server 100 and executes settlement processing if it is determined that the payment amounts match.

### (Example 6)

As a sixth example, an example will be described which has the aim of providing safe and simple money transfer between individuals, by using IC card authentication.

Normally, in a case where a money transfer transaction between individuals is performed, mediation by a device such as a settlement server or a transaction server that the financial institutions used by the individuals have in common was necessary. However, with the explosive spread of Internet-connectable communication devices, the convenience of payment via the Internet has improved, and accordingly, a safe and simple method for money transfer is required.

In view of this, by using the IC card authentication described up to this point not only for personal authentication but also for the authentication of transaction contents, the IC card authentication can be used as an authentication function common to the financial institutions and coordination becomes possible even if the settlement servers or transaction servers used differ between the financial institutions or the like used by the individuals.

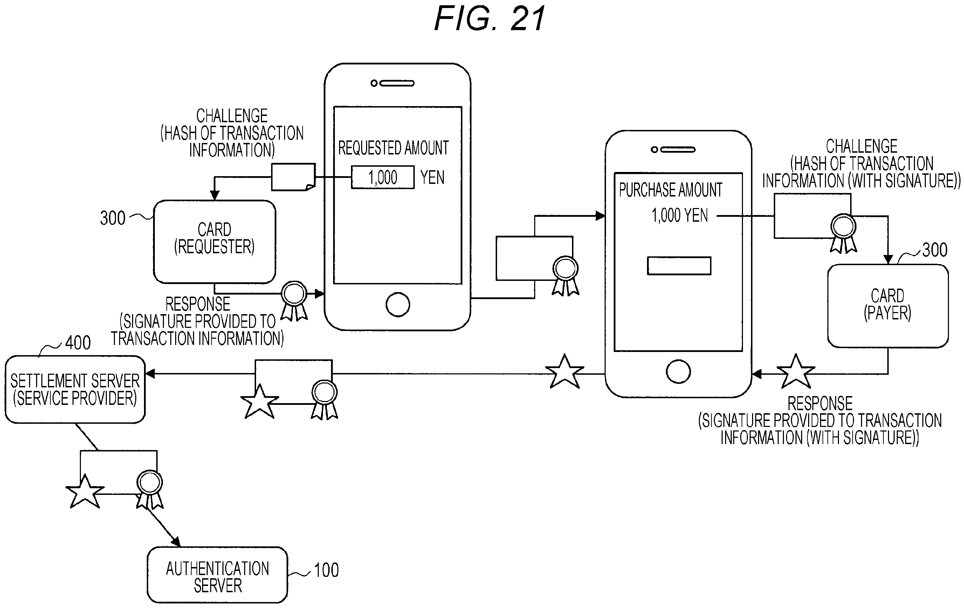

Fig. 21 is an explanatory diagram describing money transfer processing between individuals, in which the IC card authentication is used. Here, money transfer processing will be described in a case where 1,000 yen is to be transferred from a first user to a second user. The terminal 200 of the first user transmits a challenge including a hash of the transaction information to the IC card 300 of the first user. The IC card 300 of the first user generates a response to the challenge received from the terminal 200 of the first user. This response includes a signature provided to the transaction information indicating that 1,000 yen will be transferred from the first user to the second user. Then, the terminal 200 of the first user transmits the response generated by the IC card 300 of the first user to the terminal 200 of the second user.

If the terminal 200 of the second user receives the response generated by the IC card 300 of the first user, the terminal 200 of the second user transmits, to the IC card 300 of the second user, a hash of the transaction information with the signature of the IC card 300 of the first user, which is included in the response, as a challenge. The IC card 300 of the second user generates a response that is in response to the challenge received from the terminal 200 of the second user. This response includes a signature provided to the transaction information indicating that 1,000 yen will be transferred from the first user to the second user. Then, the terminal 200 of the second user transmits, to the settlement server, the response generated by the IC card 300 of the second user.

The settlement server (server of the service provider 400) receives the response generated by the IC card 300 of the first user and the response generated by the IC card 300 of the second user. The settlement server transmits both responses to the IDcd authentication server 100. The IDcd authentication server 100 compares the two responses received from the settlement server, and checks the authenticity of the two IC cards 300 and the validity of the signatures provided to the transaction information. Note that the IDcd authentication server 100 only checks the authenticity of the IC cards 300 and validity of the signatures provided to the transaction information, and is not concerned with the contents of the transaction information. Furthermore, if the validity of the two responses received from the settlement server is confirmed, the IDcd authentication server 100 sends, to the settlement server, a message indicating that money transfer from the first user to the second user is permitted. If the settlement server receives, from the IDcd authentication server 100, a message permitting money transfer from the first user to the second user, the settlement server executes processing of transferring 1,000 yen from the first user's account to the second user's account.

Through such a series of processing, safe and simple money transfer between individuals by using the IC card authentication becomes possible.

### <2. Summary>

As described above, according to the embodiment of the present disclosure, an IDcd authentication server 100 can be provided with which, when an IC card assumed to be used offline, in addition to being used online, is to be applied to a form in which a value is held in a server, authentication of the IC card can be performed safely.

The steps in the processing performed by each device in the present description do not necessarily have to be processed chronologically in the order described as a sequence diagram or a flowchart. For example, the steps in the processing performed by each device may be processed in an order differing from the order described as a flowchart or may be processed in parallel.

Furthermore, it is also possible to create a computer program for causing hardware, such as a CPU, a ROM, and a RAM, built into each device to exhibit a function equivalent to the configuration of each device described above. Also, a storage medium having the computer program stored thereon can also be provided. Furthermore, by configuring each functional block illustrated in the functional block diagram with hardware, the series of processing can be realized by hardware.

Note that, although an IC card is shown in each example described above, the IC card may be a portable terminal such as a smart phone provided with an IC chip having a non-contact communication function.

Although a preferred embodiment of the present disclosure has been described in detail with reference to the attached drawings, the technical scope of the present disclosure is not limited to such an example. It is obvious that a person having ordinary knowledge in the technical field of the present disclosure can conceive of various alterations or modifications within the scope of the technical concept described in the claims, and such alterations or modifications are also naturally understood to belong within the technical scope of the present disclosure.

Furthermore, the effects described in the present description are merely illustrative or exemplary effects, and are not limiting effects. That is, the technology pertaining to the present disclosure can achieve other effects apparent to a person skilled in the art from the disclosure in the present description, together with or in place of the effects described above.

Note that configurations such as those in the following also belong within the technical scope of the present disclosure.
(1) A server including:
   a providing unit configured to provide, to a terminal that performs proximity non-contact communication with a wireless communication device including an IC chip, authentication data for authentication of the wireless communication device;
   an acquiring unit configured to acquire, from the terminal, reception data received by the proximity non-contact communication with the wireless communication device, the reception data including a usage count of the authentication data; and
   an authenticating unit configured to perform authentication of the wireless communication device by using the authentication data and the reception data.
(2) The server according to (1) described above, in which the providing unit provides the terminal with a plurality of pieces of the authentication data in advance, prior to authentication of the wireless communication device.
(3) The server according to (1) or (2) described above, in which the authentication data that the providing unit provides has been generated on the basis of authentication data when authentication was last performed.
(4) The server according to any one of (1) to (3) described above, in which the providing unit provides the terminal with a pair of a challenge and a response, prior to authentication of the wireless communication device, the challenge to be provided from the terminal to a wireless communication device that is a target of authentication upon authentication of the wireless communication device and the response to be returned to the terminal from the wireless communication device in response to the challenge.
(5) The server according to any one of (1) to (4) described above, in which the authenticating unit performs authentication of a first wireless communication device and a second wireless communication device by using first reception data from the first wireless communication device and second reception data from the second wireless communication device.
(6) The server according to (5) described above, in which the authenticating unit determines whether or not money transfer processing between a user of the first wireless communication device and a user of the second wireless communication device is to be permitted on the basis of an authentication result of the first wireless communication device and the second wireless communication device.
(7) The server according to any one of (1) to (4) described above, in which the authenticating unit uses the reception data from the wireless communication device and transaction data to confirm authenticity of the transaction data.
(8) The server according to any one of (1) to (7) described above, in which the wireless communication device is an IC card with a built-in IC chip.
(9) The server according to any one of (1) to (7) described above, in which the wireless communication device is a portable terminal with a built-in IC chip.
(10) A server configured to acquire authentication data that is for authentication of a wireless communication device including an IC chip and that is to be provided to a terminal that performs proximity non-contact communication with the wireless communication device from a device that generates the authentication data and to cache the acquired authentication data prior to provision of the acquired authentication data to the terminal.
(11) The server according to (10) described above, in which the server provides the cached authentication data to the terminal when the terminal performs authentication of the wireless communication device.
(12) The server according to (11) described above, in which the server provides the cached authentication data to the terminal in a case where communication with the device cannot be performed upon authentication of the wireless communication device.
(13) The server according to (10) described above, in which the server deletes the cached authentication data at a predetermined timing.
(14) The server according to (13) described above, in which the server deletes the cached authentication data at the predetermined timing, the predetermined timing being a time point when a term of validity of the authentication data has elapsed.
(15) The server according to (13) described above, in which the server deletes the cached authentication data at the predetermined timing, the predetermined timing being when the communication with the device has recovered.
(16) The server according to any one of (10) to (15) described above, in which the wireless communication device is an IC card with a built-in IC chip.
(17) The server according to any one of (10) to (15) described above, in which the wireless communication device is a portable terminal with a built-in IC chip.
(18) An authentication method including:
   providing, to a terminal that performs proximity non-contact communication with a wireless communication device including an IC chip, authentication data for authentication of the wireless communication device;
   acquiring, from the terminal, reception data received by the proximity non-contact communication with the wireless communication device, the reception data including a usage count of the authentication data; and
   performing authentication of the wireless communication device by using the authentication data and the reception data.
(19) An authentication system including:
   a wireless communication device including an IC chip;
   a terminal configured to perform proximity non-contact communication with the wireless communication device; and
   a server configured to provide, to the terminal, authentication data for authentication of the wireless communication device, in which
   the server includes:
      a providing unit configured to provide the authentication data;
      an acquiring unit configured to acquire, from the terminal, reception data received by the proximity non-contact communication with the wireless communication device, the reception data including a usage count of the authentication data; and
      an authenticating unit configured to perform authentication of the wireless communication device by using the authentication data and the reception data.

### REFERENCE SIGNS LIST

- 100: IDcd authentication server
- 200: Terminal
- 300: IC card

## Claims

1. A server comprising:
a providing unit configured to provide, to a terminal that performs proximity non-contact communication with a wireless communication device including an IC chip, authentication data for authentication of the wireless communication device;
an acquiring unit configured to acquire, from the terminal, reception data received by the proximity non-contact communication with the wireless communication device, the reception data including a usage count of the authentication data; and
an authenticating unit configured to perform authentication of the wireless communication device by using the authentication data and the reception data.

2. The server according to claim 1, wherein the providing unit provides the terminal with a plurality of pieces of the authentication data in advance, prior to authentication of the wireless communication device.

3. The server according to claim 1, wherein the authentication data that the providing unit provides has been generated on a basis of authentication data when authentication was last performed.

4. The server according to claim 1, wherein the providing unit provides the terminal with a pair of a challenge and a response, prior to authentication of the wireless communication device, the challenge being to be provided from the terminal to a wireless communication device that is a target of authentication upon authentication of the wireless communication device, the response being to be returned to the terminal from the wireless communication device in response to the challenge.

5. The server according to claim 1, wherein the authenticating unit performs authentication of a first wireless communication device and a second wireless communication device by using first reception data from the first wireless communication device and second reception data from the second wireless communication device.

6. The server according to claim 5, wherein the authenticating unit determines whether or not money transfer processing between a user of the first wireless communication device and a user of the second wireless communication device is to be permitted on a basis of an authentication result of the first wireless communication device and the second wireless communication device.

7. The server according to claim 1, wherein the authenticating unit uses the reception data from the wireless communication device and transaction data to confirm authenticity of the transaction data.

8. The server according to claim 1, wherein the wireless communication device is an IC card with a built-in IC chip.

9. The server according to claim 1, wherein the wireless communication device is a portable terminal with a built-in IC chip.

10. A server configured to acquire authentication data that is for authentication of a wireless communication device including an IC chip and that is to be provided to a terminal that performs proximity non-contact communication with the wireless communication device from a device that generates the authentication data and to cache the acquired authentication data prior to provision of the acquired authentication data to the terminal.

11. The server according to claim 10, wherein the server provides the cached authentication data to the terminal when the terminal performs authentication of the wireless communication device.

12. The server according to claim 11, wherein the server provides the cached authentication data to the terminal in a case where communication with the device cannot be performed upon authentication of the wireless communication device.

13. The server according to claim 10, wherein the server deletes the cached authentication data at a predetermined timing.

14. The server according to claim 13, wherein the server deletes the cached authentication data at the predetermined timing, the predetermined timing being a time point when a term of validity of the authentication data has elapsed.

15. The server according to claim 13, wherein the server deletes the cached authentication data at the predetermined timing, the predetermined timing being when the communication with the device has recovered.

16. The server according to claim 10, wherein the wireless communication device is an IC card with a built-in IC chip.

17. The server according to claim 10, wherein the wireless communication device is a portable terminal with a built-in IC chip.

18. An authentication method comprising:
providing, to a terminal that performs proximity non-contact communication with a wireless communication device including an IC chip, authentication data for authentication of the wireless communication device;
acquiring, from the terminal, reception data received by the proximity non-contact communication with the wireless communication device, the reception data including a usage count of the authentication data; and
performing authentication of the wireless communication device by using the authentication data and the reception data.

19. An authentication system comprising:
a wireless communication device including an IC chip;
a terminal configured to perform proximity non-contact communication with the wireless communication device; and
a server configured to provide, to the terminal, authentication data for authentication of the wireless communication device, wherein
the server includes:
a providing unit configured to provide the authentication data;
an acquiring unit configured to acquire, from the terminal, reception data received by the proximity non-contact communication with the wireless communication device, the reception data including a usage count of the authentication data; and
an authenticating unit configured to perform authentication of the wireless communication device by using the authentication data and the reception data.
